(19) Europäisches Patentamt / European Patent Office / Office européen des brevets

(11) **EP 3 995 002 B1**

(12) **EUROPEAN PATENT SPECIFICATION**

(45) Date of publication and mention
of the grant of the patent:
**30.08.2023   Bulletin 2023/35**

(21) Application number: **20205646.1**

(22) Date of filing: **04.11.2020**

(51) International Patent Classification (IPC):
**A23K 10/12** *(2016.01)*      **A23K 10/14** *(2016.01)*
**A23K 10/24** *(2016.01)*      **A23K 50/80** *(2016.01)*

(52) Cooperative Patent Classification (CPC):
**A23K 10/12; A23K 10/14; A23K 10/24;**
**A23K 50/80;** Y02A 40/818

(54) **FEED COMPOSITION FOR FARMED FISH USING FERMENTED PORCINE BLOOD**

FUTTERZUSAMMENSETZUNG FÜR ZUCHTFISCHE UNTER VERWENDUNG VON FERMENTIERTEM SCHWEINEBLUT

COMPOSITION ALIMENTAIRE POUR POISSONS D'ÉLEVAGE UTILISANT DU SANG DE PORC FERMENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2022   Bulletin 2022/19**

(73) Proprietor: **Samda Co., Ltd.**
**Jeju-do 63202 (KR)**

(72) Inventors:
  • **YU, Haeng Soo**
    **63035 Jeju-si, Jeju-do (KR)**
  • **MOON, Sang Wook**
    **63174 Jeju-si, Jeju-do (KR)**
  • **KIM, Chin Kyung**
    **63337 Jeju-si, Jeju-do (KR)**
  • **LEE, Young-Don**
    **63246 Jeju-si, Jeju-do (KR)**
  • **KIM, Byeong-Hoon**
    **63328 Jeju-si, Jeju-do (KR)**

(74) Representative: **Betten & Resch**
**Patent- und Rechtsanwälte PartGmbB**
**Maximiliansplatz 14**
**80333 München (DE)**

(56) References cited:
**EP-A1- 3 721 717      KR-A- 20200 120 886**
**KR-B1- 102 115 832    US-A1- 2008 299 098**

**Description**

BACKGROUND OF THE DISCLOSURE

1. Technical Field

The present disclosure relates to a feed composition for farmed fish using fermented porcine blood.

2. Description of the Related Art

EP 3 721 717 A1 discloses a method of manufacturing fermented porcine blood having antibacterial activity and poultry egg-laying enhancement and weight gain effects, and an antibacterial composition and a poultry feed composition using the fermented porcine blood.

With the improvement in the domestic standard of living and increased incomes, the number of slaughtered domestic cows and pigs is increasing due to increased meat consumption. Until the early 2000s, blood byproducts were so popular that clotted blood from slaughtered cows and pigs was auctioned for sale. However, due to changes in food culture, at present about half of available blood is not recycled, but is disposed of .

Blood is composed primarily of proteinaceous organic materials, and rapidly decays and causes odors. In general, 5 tons of water is required to process 1 ton of animal blood, and as of 2015, the processing cost per ton is 410,000 won, and thus processing costs of about 25 billion won are reported annually in Korea.

Therefore, if slaughterhouse blood were collected, sorted and recycled in a hygienic manner, wastewater treatment costs would be lowered and environmental pollution would be reduced. Particularly, because ocean dumping of slaughterhouse blood was banned by the London Convention, which entered into force in 2013, recycling technology is more urgently required.

As disclosed in Korean Patent No. 1012648760000 entitled "Method of manufacturing liquid fertilizer using animal blood" and Korean Patent No. 1011003290000 entitled "Amino acid using livestock blood and method of manufacturing organic fertilizer using same", research has recently been conducted with the goal of recycling slaughterhouse blood as feed or fertilizer.

The present disclosure is intended to provide a technique for recycling fermented porcine blood as feed for farmed fish.

SUMMARY OF THE DISCLOSURE

The invention is defined by the independent claims. Dependent claims specify embodiments thereof.

Accordingly, an objective of the present disclosure is to provide a feed composition for farmed fish using fermented porcine blood.

Other or particular objectives of the present disclosure will be described below.

An aspect of the present disclosure pertains to a feed composition for farmed fish containing fermented porcine blood, and the feed composition for farmed fish according to the present disclosure has the effect of promoting the growth of farmed fish, as is confirmed in the following examples.

In the present disclosure, fermented porcine blood is a fermentation product of porcine blood using a mixed strain of *Lactobacillus johnsonii* and *Saccharomyces cerevisiae,* namely a fermentation product of porcine blood obtained by inoculating porcine blood with *Lactobacillus johnsonii* and *Saccharomyces cerevisiae* and performing culture.

In the present disclosure, porcine blood is blood to which a blood anticoagulant is added in order to prevent blood coagulation and to facilitate fermentation upon storage of blood, because the main component thereof is protein. The blood anticoagulant may be any of those known in the art, such as sodium citrate, ACD (acid citrate dextrose), CPD (citrate phosphate dextrose), CPDA-1 (CPD adenine-1) and the like, and may be added in an amount of 2 to 15% (v/v).

In the present disclosure, the porcine blood is preferably hydrolyzed using a proteolytic enzyme before fermentation. This hydrolysis is to prevent coagulation of the blood and to facilitate fermentation, and may be performed for a sufficient amount of time under optimal active conditions using any proteolytic enzyme. Examples of useful proteolytic enzymes include pepsin, trypsin, papain, bromelain, Neutrase™, Protamex™, Alcalase™, Provia™ and the like, and the optimal temperature for the enzyme activity is as follows: 37°C when using pepsin, 25°C when using trypsin, 45°C when using bromelain, 50°C when using Neutrase™ and Protamex™, and 50°C when using Alcalase™, and the hydrolysis time may fall in the range of 24 to 72 hr. The proteolytic enzyme may be typically added in an amount of 1 to 3% (w/v) based on the amount of the porcine blood.

In the present disclosure, the porcine blood or the hydrolyzed porcine blood are added with a carbon source in order to facilitate fermentation by the inoculated strain. The carbon source may be any of those known in the art, such as oligosaccharides, lactose, glucose, fructose, sugar, molasses, dextrose, and the like. Taking into consideration the fermentation time, the extent of fermentation, etc., the carbon source may be added in an amount of 5 wt% to 7 wt% based on the amount of hydrolyzed porcine blood.

In the present disclosure, the culture temperature falls in the range of 30°C to 50°C.

In the present disclosure, the culture period, that is, the period of culture of the fermentation strain after inoculation, is preferably 3 days or more. This is because the fermentation strain reaches a stable stage and the pH of 4.0 is maintained constant when the fermentation period is 3 days or more, as is confirmed in the following examples. Blood samples decay rapidly if they are allowed to stand at room temperature even for only 1 - 2 days because the main component thereof is protein, but a pH of 4.0 is advantageous in that it enables long-term storage of the blood for about 12 months at room temperature.

The fermented porcine blood of the present disclosure may be used in the form of a culture stock solution or in the form of a liquid or powder obtained by concentrating the culture stock solution through freeze-drying, concentration under reduced pressure, vacuum drying, spray drying, hot-air drying or the like. When desired useful components of the fermented porcine blood are concentrated and used, the fermented porcine blood may be provided in the form of an extract using an extraction process. Here, the extract may be an extract obtained by extracting the fermented porcine blood (culture stock solution or concentrate thereof) with water, an organic solvent (e.g. a C1-C4 lower alcohol such as methanol, ethanol or butanol, methylene chloride, ethylene, acetone, hexane, ether, chloroform, ethyl acetate, butyl acetate, N,N-dimethylformamide (DMF), dimethyl sulfoxide (DMSO), 1,3-butylene glycol, propylene glycol), or a mixed solvent thereof, an extract obtained using a supercritical extraction solvent such as carbon dioxide, pentane, etc., or a fraction obtained by fractionating the extract. The extraction process may be performed through any process such as cold extraction, refluxing, heating, sonication, supercritical extraction, etc. in consideration of the polarity of the extraction material, the extent of extraction, and the extent of preservation. The extract may be used in the form of a crude extract or in the form of a liquid or powder obtained by concentrating the crude extract through freeze-drying, concentration under reduced pressure, vacuum drying, spray drying, hot-air drying, or the like.

The fermented porcine blood of the present disclosure may be a product obtained by mixing fermented porcine blood with rice bran and/or soybean meal and performing secondary (additional) fermentation with *Lactobacillus johnsonii* and *Saccharomyces cerevisiae* present in the fermented porcine blood. This secondary fermentation product of porcine blood is superior in the effect of promoting the growth of farmed fish compared to primarily fermented porcine blood (i.e. the primary fermentation product of porcine blood) as described above or a fermentation product of rice bran and/or soybean meal (in which the results thereof are not shown in the examples later), and also, the primary fermentation product of porcine blood may be mixed with rice bran and/or soybean meal and further fermented, whereby the primary fermentation product of porcine blood in the form of a culture solution is converted into a solid particulate form, making it possible to be uniformly mixed in compound feed when used.

In the present disclosure, the rice bran is a byproduct obtained through a process of milling brown rice into white rice, and is usually composed of seed coats and embryos.

In the present disclosure, soybean meal, also known as skim soybean, is a byproduct obtained after making milk from soybeans, and is known to have high protein content (40-50%).

In the present disclosure, the secondary fermentation product of porcine blood may be obtained by mixing the primary fermentation product of porcine blood with rice bran powder and/or soybean meal powder to afford a mixture and allowing the mixture to stand at a temperature in a range of 15°C to 50°C, particularly 30°C to 50°C, suitable for fermentation by *Lactobacillus johnsonii* and *Saccharomyces cerevisiae.* Here, the culture period may be at least 2 days or more, preferably 5 days or more, and more preferably 7 days or more. Also, a carbon source, such as sugar, a carbon source, etc., may be added in an appropriate amount (0.1% (w/v) to 10% (w/v)) in order to promote fermentation.

Here, the mixing ratio of the primary fermentation product of porcine blood to the rice bran powder and/or soybean meal powder is not particularly limited, and, based on 100 parts by weight of the primary fermentation product of porcine blood, the amount of the rice bran powder or soybean meal powder or combination thereof may be 50 parts by weight to 150 parts by weight. When the primary fermentation product of porcine blood is mixed with both the rice bran powder and the soybean meal powder and the resulting mixture is fermented, the mixing ratio thereof is as follows: based on 100 parts by weight of the primary fermentation product of porcine blood, 25 parts by weight to 75 parts by weight of the rice bran powder and 25 parts by weight to 75 parts by weight of the soybean meal powder may be used. Most preferably, when the primary fermentation product of porcine blood is mixed with both the rice bran powder and the soybean meal powder and the resulting mixture is fermented, based on 100 parts by weight of the primary fermentation product of porcine blood, the amount of the rice bran powder is 50 parts by weight and the amount of the soybean meal powder is 50 parts by weight.

The feed composition of the present disclosure may be prepared by including components typically used in feed for farmed fish for the purposes of promoting the growth of farmed fish, promoting digestion, enhancing feed efficiency, enhancing immunity, enhancing disease resistance, and the like, in addition to the fermented porcine blood. Examples of such components include plant components, animal components, mineral components, and the like.

Examples of the plant components may include grains, such as oats, buckwheat, wheat, barley, sorghum, rice, corn, foxtail millet, barnyard millet, rye, etc.; brans (grain byproducts), such as proso millet hull, oat bran, soybean bran, wheat bran (wheat gluten), barley bran, sorghum bran, rice bran, corn husk, adlay hull, foxtail millet bran, etc.; oilseed meals, such as mustard seed meal, guava seed oil meal, oat oil meal, soybean meal, perilla seed meal, brewer's spent grain, cottonseed meal, defatted wheat germ meal, coconut meal, olive meal, starch meal, etc.; root and tuber crops, such as potato, sweat potato, pork potato, etc.; food-processing byproducts, such as potato-processing byproducts, fruit-processing byproducts, vegetable-processing byproducts, etc.; algae, such as *Meristotheca papulosa, Ulva lactuca, Ecklonia cava,* laver seaweed, *Gracilaria verrucosa,* kelp, etc.; microalgae, such as *Nannochloropsis, Dunaliella,* Spirulina, etc.; dietary fibers, such as dallisgrass, ladino clover, redtop, sprout barley, etc.; oils and fats, such as soybean oil, hemp seed oil, cottonseed oil, rice bran oil, etc.; starches, such as grain starch, root and tuber starch, etc.; legumes, such as soybeans, lentil beans, etc.; fruits, such as mangos, bananas, pears, apples, etc.; vegetables, such as eggplant, carrot, radish, sugar beet, Hooker chives, etc.; and mushrooms, such as *Hericium erinaceus, Pleurotus ostreatus, Ganoderma lucidum,* etc.

These plant components may be included in appropriate amounts in the feed composition of the present disclosure depending on the purpose of use thereof, such as promoting growth, promoting digestion, enhancing feed efficiency, and the like. In general, the plant component is included in an amount of about 3 to about 80 wt% depending on the type of component, purpose of use, etc.

Examples of the animal components may include proteins, such as dried poultry byproducts, dried fish, crab meal, egg powder, *Neverita didyma* powder, fish meal, etc.; inorganics, such as bone meal, bone ash, fish bone meal, oyster shell powder, etc.; oils and fats, such as chicken oil, animal edible residual oil, pork fat, beef tallow, etc.; insects, such as mealworm larva, dried crickets, dried grasshoppers, etc.; plankton, such as rotifers, mysis shrimp, daphnia, etc.; and dairy-processing byproducts, such as lactose, whole milk powder, cheese, skim milk powder, etc. These animal components may also be included in the feed composition of the present disclosure in the range of about 3 to about 80 wt% depending on the type of component, purpose of use, etc.

Examples of the mineral components may include limestone powder, calcium carbonate, calcium sulfate, iron citrate, sodium molybdate, ammonium molybdate, sodium selenate, sodium selenite, chromium chloride, potassium iodate, calcium iodate, potassium iodide, manganese carbonate, copper sulfate, manganese sulfate, zinc sulfate, etc. These mineral components are included in trace amounts (0.0001 to 5 wt%) in the feed composition of the present disclosure.

The feed composition of the present disclosure may further include, in addition to the plant, animal, and mineral components, binders, preservatives, vitamin agents, enzyme agents, microbial agents, flavoring agents, etc. for the enhancement of immunity, enhancement of feed preservation, enhancement of uniformity of mixing of feed components, easy formulation, and the like. These components are included in the feed composition of the present disclosure in appropriate amounts (0.0001 wt% to 10 wt%) depending on the purpose of use thereof.

Examples of the binder may include natural binders such as guar gum, cellulose, gelatin, etc., and synthetic binders such as sodium alginate, ammonium alginate, potassium alginate, etc.

Examples of the preservative may include acidulants such as malic acid, tartaric acid, formic acid, citric acid, etc., anticoagulants such as calcium stearate, tin chloride, etc., antioxidants such as resveratrol, gallic acid, vitamin E, etc., and antifungal agents such as propionic acid, sodium propionate, etc.

Examples of the vitamin agent may include L-carnitine, niacin, nicotinic acid amide, biotin (vitamin H), vitamin A, thiamine naphthalene-1,5-disulfonate, thiamine lauryl sulfate, etc.

Examples of the enzyme agent may include glucoamylase, lactase, cellulase, lipase, phytase, protease, etc.

Examples of the microbial agent may include lactic-acid bacteria such as *Lactobacillus lactis, Lactobacillus rhamnosus, Lactobacillus bulgaricus, Lactobacillus brevis,* etc., fungi such as *Aspergillus oryzae,* etc., and yeasts such as *Saccharomyces cerevisiae,* etc.

Examples of the flavoring agent may include sweeteners such as natural flavoring substances, synthetic flavoring substances, licorice, fructose, etc.

The feed composition of the present disclosure may be formulated in the form of a liquid (especially in the form of a porcine blood culture stock solution or a concentrate thereof), powder, granule, pill or pellet.

Another aspect of the present disclosure pertains to a feed composition for promoting the growth of farmed fish containing, as an active ingredient, the fermented porcine blood as described above.

In the following examples, when feed is added with the fermented porcine blood and then fed to farmed fish, distinct growth promotion effects such as increased total length and weight gain may be exhibited. These effects may directly lead to economic benefits to fish farmers.

In the feed composition of the present disclosure, fermented porcine blood may be included in an amount of 0.1 wt% to 10 wt% based on the total weight of the feed composition, in consideration of the intended growth promotion effect. The following examples show the effect of sufficient weight gain even when feed is added with 1 to 4 wt% of fermented porcine blood and fed to farmed fish for 2 to 3 months. Hence, it is preferable to add the fermented porcine blood to the feed composition in an amount of 1 to 4 wt%.

The feed composition of the present disclosure may be prepared using the typical components of feed for farmed fish as described above, for example, plant components, mineral components, and the like, in addition to the active ingredient, or may be formulated in the form of a powder or the like as described above.

Still another aspect of the present disclosure pertains to a method of promoting the growth of farmed fish including feeding the fermented porcine blood as described above to farmed fish.

In the method of the present disclosure, the fermented porcine blood may be fed in a manner in which the fermented porcine blood is added to the feed or is placed in a farming water tank.

According to the present disclosure, the feed composition for farmed fish or the method of promoting the growth of farmed fish may be applied to *Sebastes schlegelii,* halibut (fish belonging to bony fish Paralichthyidae, including *Paralichthys olivaceus* and *Pseudorhombus pentophthalmus*), *Pagrus major, Acanthopagrus schlegelii, Oplegnathus fasciatus, Lateolabrax* spp., Mugilidae, flounders, filefishes, yellowtails, *Scomber japonicus, Konosirus punctatus, Convict grouper,* trout, *Miichthys miiuy, Larimichthys polyactis,* blowfish, Carangimorpha, etc.

As described above, the present disclosure can provide a feed composition for farmed fish using fermented porcine blood. The feed composition of the present disclosure, when fed to farmed fish, has growth promotion effects, observed as increased total length, weight gain, and the like.

BRIEF DESCRIPTION OF DRAWINGS

FIG. 1 shows changes in body weight during the experimental period in a simple water-tank experiment;
FIG. 2 shows changes in total length during the experimental period in a simple water-tank experiment; and
FIG. 3 shows changes in total length and body weight during the experimental period in a field application experiment.

DESCRIPTION OF SPECIFIC EMBODIMENTS

Hereinafter, a detailed description will be given of the present disclosure through the following examples. However, these examples are not to be construed as limiting the scope of the present disclosure.

<Examples> Preparation of fermented porcine blood and experiment on effect of fermented porcine blood as feed additive for farmed fish

1. Preparation of primary fermentation product of porcine blood

Porcine blood was obtained from the Jeju Pig-Breeding Nonghyup Livestock Cooperative Processing Center on Jeju Island, and the blood sample was added with 10% (v/v) of a 4% sodium citrate solution, serving as a blood anticoagulant, and was stored frozen until the experiment.

The frozen blood sample was thawed at room temperature, added with 1% (w/v) of a proteolytic enzyme Alcalase™ (Novozyme, Co.) and with 6% (w/v) of sugar as a carbon source, mixed therewith, inoculated with 6% (v/v) of a mixed strain of a *Lactobacillus johnsonii* (this strain was isolated and identified by the inventors of the present invention) culture solution and a *Saccharomyces cerevisiae* KCTC 7083 culture solution, and cultured for 3 days to 30 days while performing hydrolysis with stirring at 50-70 rpm in the temperature range of $40°C \pm 10°C$, thus manufacturing fermented porcine blood.

The fermented porcine blood thus manufactured had a solid content of 20 brix, and the pH thereof was 4.3 after culture for 3 days and was maintained at 4.0 after culture for 4 days, and thus long-term storage thereof for about 12 months at room temperature was determined to be possible.

Based on the results of analysis of components thereof, heavy metals such as lead, mercury and the like were not detected, and antibiotics were not detected. These results were found to satisfy the Standards and Specifications of Feed and the like as set forth by the Ministry of Agriculture, Food and Rural Affairs.

**2. Preparation of secondary fermentation product of porcine blood**

The concentrate (solid content: 30 brix) of the fermented porcine blood (pH 4.0) obtained through culture for 30 days in Preparation Example 1 was mixed at a weight ratio of 1:1 with a combination of rice bran powder and soybean meal powder at the same weight ratio (1:1) (the fermented porcine blood and the combination were mixed at a weight ratio of 1:1), and the resulting mixture was cultured at a temperature of about 30°C for 7 days and then dried in a vacuum oven, thus manufacturing a secondary fermentation product of porcine blood.

**3. Simple water-tank experiment**

**3.1 Experimental method**

**3.1.1 Breeding method**

The experimental fish that was used was flatfish, and the sample that was used was the primary fermentation product of porcine blood (liquid, 20 brix). Depending on the amount of the primary fermentation product of porcine blood that was added to the compound feed, experimental groups were divided into 0% (untreated group added with compound feed alone, control), and 1%, 2% and 3% (w/w) treatment groups, the flatfish were reared in a continuous flow-through cylindrical water tank (90 L), and the experiment was conducted.

At the start of the experiment, the total length and body weight of flatfish were 17.8±0.2 cm and 38.911.1 g, respectively. 30 flatfish were placed in each water tank, after which acclimation was carried out in a manner in which only feed was provided for a week before the start of the experiment, and the experiment was then conducted.

During the experimental period, the compound feed was provided twice a day (09:00 AM and 17:00 PM), and the primary fermentation product of porcine blood was provided in a mixture with the compound feed.

During the experimental period, the water temperature and dissolved oxygen content were measured every day using a dissolved oxygen meter (YSI-85).

**3.1.2 Measurement of extent of growth promotion, feed efficiency, etc.**

The total length and body weight of the experimental fish were measured every 4 weeks after the start of the experiment, and the feed supply and the feed intake were measured. The total weight gain, feed coefficient, and food conversion rate were calculated using the following equations.

- 
$$\text{Total weight gain} = \text{Total body weight at start} - \text{total body weight at end}$$

- 
$$\text{Feed coefficient} = \text{Feed supply/total weight gain}$$

- 
$$\text{Food conversion rate} = \{(\text{Average body weight at end of experiment}) - (\text{average body weight at start of experiment})\}/(\text{feed intake}) \times 100$$

For the measured total length and body weight, a one-way variance analysis (ONE-WAY ANOVA) was performed to verify the significance at the 5% level, and whether the difference between the averages was significant was determined.

**3.2 Experimental results**

**3.2.1 Breeding environment and viability**

During the experimental period, the breeding water temperature fell in the range of 16.0 to 24.7°C (average water temperature: 21.1±0.1°C), and the dissolved oxygen was 4.5 to 7.7 mg/L (average dissolved oxygen: 6.3±0.4 mg/L). During the breeding period, no individuals died in any of the experimental groups.

**3.2.1 Extent of growth**

**①Change in body weight**

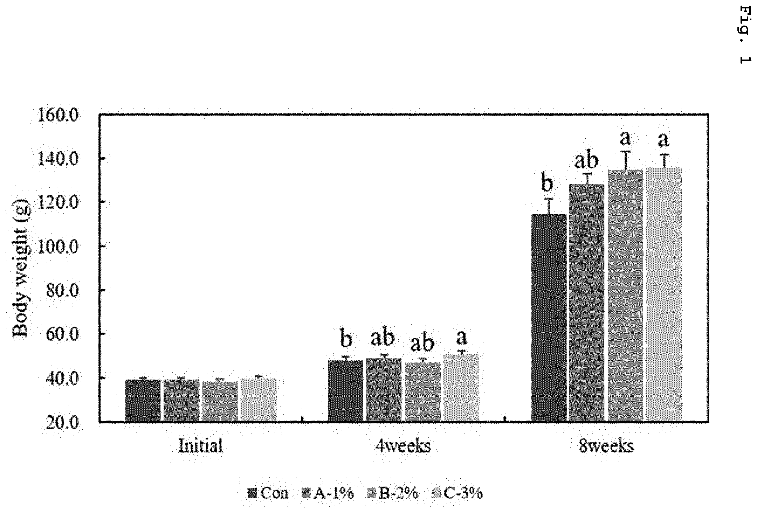

The average body weight at the start of the experiment was 39.2±0.9 g for the control, 38.811.1 g for the 1% treatment group, 38.2±1.3 g for the 2% treatment group, and 39.5±1.1 g for the 3% treatment group. Also, the average body weight on the 4th week was 70.2±3.8 g for the control, 76.2±3.6 g for the 1% treatment group, 80.4±4.8 g for the 2% treatment group, and 87.1±3.7 g for the 3% treatment group. The growth of flatfish was significantly high in the 3% treatment group on the 4th week. The average body weight on the 8th week was 114.3±7.0 g for the control, 127.9±4.8 g for the 1% treatment group, 134.9±8.0 g for the 2% treatment group, and 135.4±6.5 g for the 3% treatment group. In the 2% and 3% treatment groups on the 8th week, significantly high results appeared (P>0.05). The results thereof are shown in FIG. 1.

### ②Change in total length

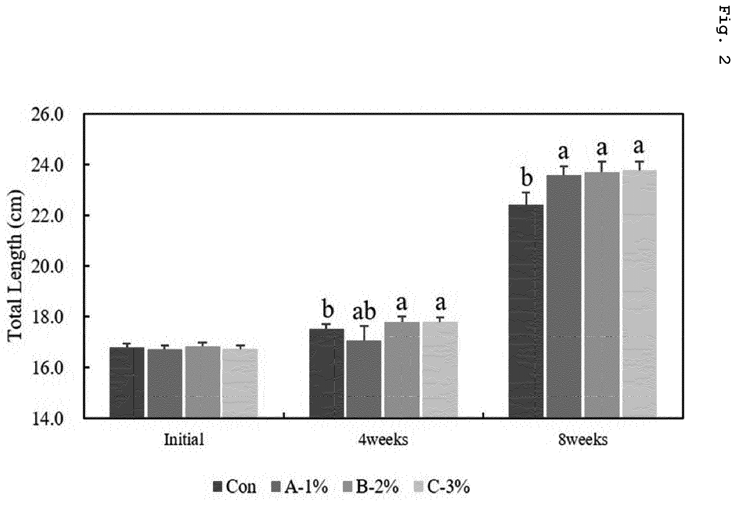

The average total length at the start of the experiment was 17.8±0.2 cm for the control, 17.7±0.2 cm for the 1% treatment group, 17.8±0.2 cm for the 2% treatment group, and 17.7±0.2 cm for the 3% treatment group. The average total length on the 4th week was 19.7±0.3 cm for the control, 20.2±0.3 cm for the 1% treatment group, 20.6±0.3 cm for the 2% treatment group, and 20.9±0.3 cm for the 3% treatment group. The effect of increase in the total length on the 4th week was significantly high in the 2% and 3% treatment groups. The average total length on the 8th week was 22.4±0.5 cm for the control, 23.6±0.3 cm for the 1% treatment group, 23.7±0.4 cm for the 2% treatment group, and 23.8±0.3 cm for the 3% treatment group. All of the treatment groups on the 8th week were significantly longer than the control (P>0.05). The results thereof are shown in FIG. 2.

### ③Feed efficiency

The average feed intake was 2108.8 g for the control, 2093.7 g for the 1% treatment group, 2272.5 g for the 2% treatment group, and 2279.4 g for the 3% treatment group. Here, in the 2% and 3% treatment groups, the feed intake tended to be somewhat higher.

The food conversion rate was 3.6% for the control, 4.3% for the 1% treatment group, 4.3% for the 2% treatment group, and 4.2% for the 3% treatment group. The food conversion rate appeared high in all of the treatment groups.

The results for feed efficiency are summarized in Table 1 below.

[Table 1]

| Classification | Control | A-1% | B-2% | C-3% |
|---|---|---|---|---|
| Feed intake (g) | 2108.8 | 2093.7 | 2272.5 | 2279.4 |
| Feed conversion rate | 3.6 | 4.3 | 4.3 | 4.2 |

### 4. Field application experiment

### 4.1 Experimental method

### 4.1.1 Breeding method and water quality environment

The field application experiment was conducted at the Haeyeon Fish Farm (located in Gujwa-eup, Jeju-si, Jeju Island).

The sample that was used was the secondary fermentation product of porcine blood.

In a control, general compound feed not added with the secondary fermentation product of porcine blood was provided, and in a treatment group, compound feed added with 4% (w/w) of the secondary fermentation product of porcine blood was provided. Other feed additives, drugs and the like were equally applied to the control and the treatment group.

As for the experimental fish, 80,000 flatfish fry (8-10 cm) were equally divided into 40,000 fish for the control and 40,000 fish for the treatment group.

The experimental water tank was a 10 m x 10 m tank, and 5 water tanks for the treatment group and 5 water tanks for the control were used.

The experimental period was 3 months, and a total of 6 tons of compound feed, corresponding to 2 tons per month, was used (3 tons for the control and 3 tons for the treatment group).

The seawater that was supplied to the experimental farm was sub-surface seawater, in which water characteristics such as water temperature, salinity, pH and the like were constant. Based on the results of on-site water quality measurement during the experimental period, the water temperature was 16.5±1.0°C, the salinity was 32±1.0 psu, the dissolved oxygen (DO) was 9.23±1.25 mg/L, and the pH was 8.02±0.24.

Moreover, the results of measurement of water quality of the experimental farm during the experimental period are shown as average values in Table 2 below.

[Table 2]

| No. | Test items | Unit | Experimental results | | |
|---|---|---|---|---|---|
| | | | Raw water | Control (B5) | Treatment group (B3) |
| 1 | General bacteria (Total Colony Counts)* | CFU/ml | 8.3±3.1 | 12.7±3.1 | 26.0±14.7 |
| 2 | Hydrogen ion concentration (pH) | - | 7.80±0.10 | 7.80±0.10 | 7.87±0.06 |
| 3 | Nitrate nitrogen (NO3-N) | mg/L | Not detected | Not detected | Not detected |
| 4 | Nitrite nitrogen (NO2-N) | mg/L | Not detected | Not detected | Not detected |
| 5 | Ammonia nitrogen (NH3-N) | mg/L | 0.07±0.00 | 0.87±0.03 | 0.08±0.01 |
| * General bacteria include non-pathogenic bacteria, pathogenic bacteria, etc. | | | | | |

As is apparent from Table 2, for most of the items, it was determined that there was no change in water quality characteristics for the raw water, the control and the treatment group. Here, the total colony count in the treatment group was appropriately doubled compared to that of the control, but the total colony count in all of the experimental groups for 3 months was maintained at 30 CFU/mL or less.

**4.1.2 Measurement of extent of growth promotion, feed efficiency, etc.**

Flatfish were divided into a treatment group and a control, and 40,000 flatfish in each group were reared. At the start of the experiment, flatfish were classified so that there was no significant difference in size between the groups. The flatfish were bred for a total of 12 weeks. In order to investigate changes in body growth, the total length and the body weight were measured a total of 8 times, including at the start of the experiment and on the 2nd, 4th, 6th, 8th, 10th and 12th weeks of the experiment. Measurement was performed using 100 flatfish randomly selected from each group.
The measured total length and body weight of flatfish were analyzed for significant differences (P < 0.05) through independent sample t-test analysis using the statistical processing program SPSS 21.0.
In addition, the growth rate, feed coefficient, and feed efficiency of flatfish were calculated using the following equations.

- 
```
      Growth rate = (Fish body weight at end - fish body
  weight at start)/fish body weight at start × 100 (%)
```

- 
```
      Feed efficiency = Total supply/(fish body weight at end
  - fish body weight at start)
```

- 
```
      Feed coefficient = 10/(feed efficiency × 10) × 100 (%)
```

**4.2 Experimental results**

**4.2.1 Change in body weight**

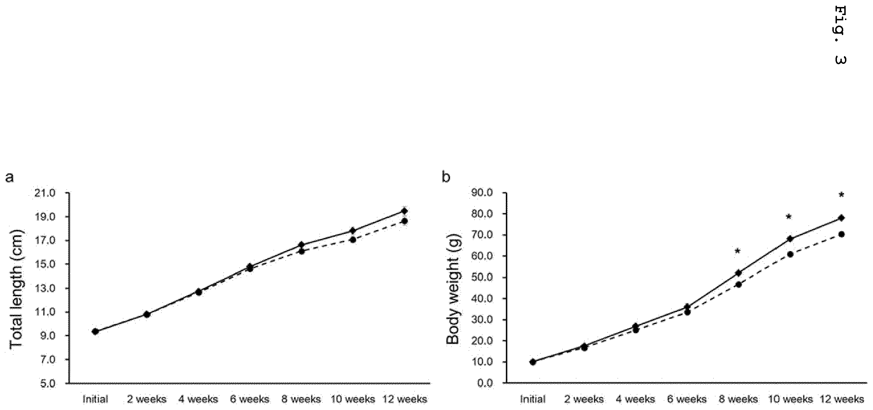

At the start of the experiment, the body weight was 10.09±0.12 g in the treatment group and 10.06±0.17 g in the control, based on which there was determined to be no significant difference between the groups. From the 8th week of the experiment, there was a significant difference between 52.05±0.82 g in the treatment group and 46.85±0.93 g in the control, indicating that the treatment group exhibited 11.10% higher total weight gain than the control. On the 10th week, the treatment group and the control were 68.10±0.95 g and 60.95±0.92 g, respectively, indicating that the total weight gain of the treatment group was 11.73% higher. At the end of the experiment, the treatment group and the control were 78.02±0.91 g and 70.35±1.04 g, respectively, indicating that the total weight gain of the treatment group was 10.82% higher. The results thereof are shown in FIG. 3.

**4.2.2 Change in total length**

At the start of the experiment, the total length of the treatment group was 9.36±0.15 cm, and the total length of the control was 9.39±0.12 cm, based on which there was determined to be no significant difference between the groups. At the end of the experiment, the total lengths of the treatment group and the control group were 19.49±0.36 cm and 18.64±0.36 cm, respectively. Although there was no significant difference between the groups, the total length of the treatment group was greater than that of the control. The results thereof are shown in FIG. 3.

**4.2.3 Growth rate, feed coefficient and feed efficiency**

Based on the results of measurement of the growth rate, feed coefficient, and feed efficiency of the treatment group and the control at the end of the experiment, the growth rate of the treatment group was 563.11%, which was higher than 499.40% for the control. The feed coefficient of the treatment group was 2.36, which was lower than 2.67 for the control. The feed efficiency of the treatment group was 42.29%, which was higher than 37.41% for the control. The results thereof are summarized in Table 3 below.

[Table 3]

| Classification | Growth rate (%) | Feed coefficient | Feed efficiency |
|---|---|---|---|
| Treatment group | 563.11 | 2.36 | 42.29 |
| Control | 499.40 | 2.67 | 37.41 |

**Claims**

1. A feed composition for farmed fish, comprising fermented porcine blood obtained by inoculating porcine blood with a mixed strain of *Lactobacillus johnsonii* and *Saccharomyces cerevisiae* and performing culture,

   wherein the porcine blood is added with a blood anticoagulant and with a proteolytic enzyme, and the mixed strain is inoculated into the porcine blood added with the blood anticoagulant and with the proteolytic enzyme, wherein the porcine blood added with the proteolytic enzyme is added with 5 to 7 wt% of a carbon source, and the culture is performed at 30°C to 50°C.

2. The composition according to any of the preceding claims, wherein the fermented porcine blood is in a form of a culture stock solution, a liquid in which the culture stock solution is concentrated, a powder in which the culture stock solution is concentrated, or an extract obtained by extracting the culture stock solution or a concentrate thereof with water or an organic solvent.

3. The composition according to any of the preceding claims, wherein the fermented porcine blood is an additional fermentation product of porcine blood obtained by adding the fermented porcine blood with rice bran, soybean meal or a combination thereof to afford a mixture and allowing the mixture to stand for additional fermentation.

4. The composition of claim 3, wherein the fermented porcine blood is added with a combination of rice bran and soybean meal, and, based on 100 parts by weight of the fermented porcine blood, 25 to 75 parts by weight of rice bran and 25 to 75 parts by weight of soybean meal are added.

5. The composition of any one of claims 1 to 4, wherein the composition is used to promote growth of farmed fish.

6. A method of promoting growth of farmed fish, comprising feeding the composition of claim 4 to farmed fish.

**Patentansprüche**

1. Futterzusammensetzung für Zuchtfische, umfassend fermentiertes Schweineblut, das durch Inokulieren von Schweineblut mit einem gemischten Stamm von *Lactobacillus johnsonii* und *Saccharomyces cerevisiae* und Durchführen einer Züchtung erhalten wird,

wobei dem Schweineblut ein Blut-Antikoagulans und ein proteolytisches Enzym hinzugefügt wird, und wobei der gemischte Stamm in das Schweineblut inokuliert wird, dem das Blut-Antikoagulans und das proteolytische Enzym hinzugefügt ist,

wobei dem Schweineblut, dem das proteolytische Enzym hinzugefügt ist, 5 bis 7 Gewichts-% einer Kohlenstoffquelle hinzugefügt sind, und die Züchtung bei 30°C bis 50°C durchgeführt wird.

2. Zusammensetzung nach einem der vorhergehenden Ansprüche, wobei das fermentierte Schweineblut in einer Form einer Zuchtstammlösung vorliegt, einer Flüssigkeit, in der die Zuchtstammlösung konzentriert ist, einem Pulver, in dem die Zuchtstammlösung konzentriert ist, oder einem Extrakt, erhalten durch Extrahieren der Zuchtstammlösung oder eines Konzentrats davon mit Wasser oder einem organischen Lösungsmittel.

3. Zusammensetzung nach einem der vorhergehenden Ansprüche, wobei das fermentierte Schweineblut ein zusätzliches Fermentierungsprodukt von Schweineblut ist, das dadurch erhalten wird, dass man dem fermentierten Schweineblut Reiskleie, Sojamehl oder eine Kombination davon hinzufügt, um eine Mischung zu bilden, und der Mischung erlaubt, für eine zusätzliche Fermentierung zu ruhen.

4. Zusammensetzung nach Anspruch 3, wobei dem fermentierten Schweineblut eine Kombination von Reiskleie und Sojamehl hinzugefügt ist, und basierend auf 100 Gewichtsanteilen des fermentierten Schweincbluts 25 bis 75 Gewichtsanteile von Reiskleie und 25 bis 75 Gewichtsanteile von Sojamehl hinzugefügt sind.

5. Zusammensetzung nach einem der Ansprüche 1 bis 4, wobei die Zusammensetzung verwendet wird, um das Wachstum von Zuchtfischen zu fördern.

6. Verfahren zum Fördern des Wachstums von Zuchtfischen, umfassend ein Verfüttern der Zusammensetzung nach Anspruch 4 an Zuchtfische.

**Revendications**

1. Une composition alimentaire pour poissons d'élevage, comprenant du sang porcin fermenté obtenu en inoculant du sang porcin avec une souche mixte de *Lactobacillus johnsonii* et de *Saccharomyces cerevisiae* et en réalisant une culture,

le sang porcin étant additionné d'un anticoagulant sanguin et d'une enzyme protéolytique, et la souche mixte est inoculée dans le sang porcin additionné de l'anticoagulant sanguin et de l'enzyme protéolytique, le sang porcin additionné de l'enzyme protéolytique étant additionné de 5 à 7 % en poids d'une source de carbone, et la culture est réalisée entre 30°C et 50°C.

2. La composition selon l'une quelconque des revendications précédentes, dans laquelle le sang porcin fermenté se présente sous la forme d'une solution mère de culture, d'un liquide dans lequel la solution mère de culture est concentrée, d'une poudre dans laquelle la solution mère de culture est concentrée, ou d'un extrait obtenu en extrayant la solution mère de culture ou un concentré de celle-ci avec de l'eau ou un solvant organique.

3. La composition selon l'une quelconque des revendications précédentes, dans laquelle le sang porcin fermenté est un produit de fermentation supplémentaire de sang porcin obtenu en ajoutant le sang porcin fermenté avec du son de riz, de la farine de soja ou une combinaison de ceux-ci pour obtenir un mélange, et en laissant le mélange reposer pour une fermentation supplémentaire.

4. La composition selon la revendication 3, dans laquelle le sang porcin fermenté est additionné d'une combinaison de son de riz et de tourteau de soja, et, sur la base de 100 parties en poids de sang porcin fermenté, de 25 à 75 parties en poids de son de riz et de 25 à 75 parties en poids de tourteau de soja sont ajoutées.

5. La composition selon l'une quelconque des revendications 1 à 4, la composition étant utilisée pour favoriser la croissance des poissons d'élevage.

6. Un procédé pour favoriser la croissance de poissons d'élevage, comprenant le fait de fournir la composition selon la revendication 4 à des poissons d'élevage.

Fig. 1

Fig. 2

Fig. 3

**EP 3 995 002 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3721717 A1
- KR 1012648760000
- KR 1011003290000